# EUROPEAN PATENT APPLICATION

(11) **EP 4 664 698 A1**
(43) Date of publication of application: **17.12.2025**
(21) Application number: 24181499.5
(22) Date of filing: 11.06.2024
(51) Int. Cl.: H02G 1/12, H02G 1/14, H02G 15/08

(54) **METHOD OF MAKING A POWER CABLE JOINT**

(71) Applicant: NKT HV Cables AB, 371 60 Lyckeby (SE)
(72) Inventor: ANTONISCHKI, Jörn, Lyckeby (SE)
(74) Representative: Kransell & Wennborg KB

(57) **Abstract**

A method of making a joint (3) of a power cable (1), comprising: a) providing two cable sections (1a, 1b) to be jointed, each cable section (1a, 1b) comprising a conductor (5a, 5b) having a conductor end, and an insulation system including an inner semiconducting layer (7) arranged around the conductor (5a, 5b), an insulation layer (9) arranged radially outside the inner semiconducting layer (7), and an outer semiconducting layer (11) arranged radially outside the insulation layer (9), b) mechanically processing the insulation system of each cable section (1a, 1b) by gradually increasing a radius of the insulation layer (9) in an axial direction away from the conductor end of the cable section (1a, 1b), to obtain a tapering insulation layer section that tapers towards the conductor end, wherein the processing is performed such that an outer surface of a radially innermost portion (9.1) of the tapering insulation layer section, interfacing the inner semiconducting layer (7), obtains a first inclination relative to a longitudinal axis of the cable section (1a, 1b), and that an outer surface of an intermediate portion (9.2) of the tapering insulation layer section obtains a second inclination which is larger than the first inclination, wherein the outer surface of the radially innermost portion (9.1) transitions smoothly to the outer surface of the intermediate portion (9.2), and c) making a joint insulation system (13), after the conductors of the two cable sections (1a, 1b) have been electrically connected to each other by means of a conductor joint (5c), the joint insulation system (13) connecting to the inner semiconducting layer (7) of each cable section (1a, 1b), to the tapering insulation layer section of each cable section (1a, 1b), and to the outer semiconducting layer (11) of each cable section (1a, 1b).

## Description

### TECHNICAL FIELD

The present disclosure generally relates to power cable joints.

### BACKGROUND

Power cables may be composed of several power cable lengths, or sections, that are joined by means of cable joints. The cable joint includes the conductor joint, and a joint of the insulation system of the power cable lengths. The insulation system of a power cable comprises an inner semiconducting layer, an insulation layer outside the inner semiconducting layer, and an outer semiconducting layer outside the insulation layer.

A conventional flexible joint is prepared by preparing two power cable ends with exposed conductor ends, exposed conductor screen and a frustoconical portion of the insulation layer. The insulation system of the joint is then built step by step, usually by winding tape layers and melting/crosslinking the tape layers under heat and pressure. First the inner semiconducting layer is restored, then the insulation layer, and lastly the outer semiconducting layer.

In operation, a strong electric field is present between the inner semiconducting layer, which has a voltage potential at the operating voltage of the power cable, and the outer semiconducting layer, which is grounded. The interface between the joint insulation system and the insulation system of the two power cable lengths that are joined is, due to the aforementioned frustoconical portion of the insulation system of the respective power cable end, inclined in relation to the longitudinal axis of the power cable and in relation to the radial direction of the power cable, which also is the main direction of the electrical field. As a result, at a given position along the longitudinal axis of the cable joint, the electric field between the inner semiconducting layer and the outer semiconducting layer always passes through only a single point in the radial direction along the interface between the insulation material of the joint and the insulation layer of a power cable length, which increases the dielectric strength of the power cable compared with having a non-inclined interface in a radial direction, in parallel with the electrical field.

### SUMMARY

A breakdown in a flexible or factory joint is often initiated either at or near the triple point of the insulation layer of the cable, the insulation layer of the joint insulation, and the outer or inner semiconducting layer, as any material transition/material interface, even between two sections of similar or even the same material, creates a weakness against the electric field. Two interfacing surfaces have the lowest dielectric withstand strength if they extend parallel with the electric field and are strongest if they are oriented at 90° in relation to the electric field.

Further, the electric field has its maximum close to the inner semiconducting layer for AC power cables, or close to the outer semiconducting layer in steady state situation for DC power cables, and for joints with a frustoconical section of the insulation systems as described above, the electric field crosses the interface between the insulation layer of the power cable and joint insulation layers at an angle which is far from 90°, i.e., not in the strongest direction in relation to the insulation interface.

In view of the above an object of the present disclosure is to provide a method of making a joint of a power cable which solves or at least mitigates the problems of the prior art.

There is hence according to a first aspect of the present disclosure provided a method of making a joint of a power cable, comprising: a) providing two cable sections to be jointed, each cable section comprising a conductor having a conductor end, and an insulation system including an inner semiconducting layer arranged around the conductor, an insulation layer arranged radially outside the inner semiconducting layer, and an outer semiconducting layer arranged radially outside the insulation layer, b) mechanically processing the insulation system of each cable section by gradually increasing a radius of the insulation layer in an axial direction away from the conductor end of the cable section, to obtain a tapering insulation layer section that tapers towards the conductor end, wherein the processing is performed such that an outer surface of a radially innermost portion of the tapering insulation layer section, interfacing the inner semiconducting layer, obtains a first inclination relative to a longitudinal axis of the cable section, and that an outer surface of an intermediate portion of the tapering insulation layer section obtains a second inclination which is larger than the first inclination, wherein the outer surface of the radially innermost portion transitions smoothly to the outer surface of the intermediate portion, and c) making a joint insulation system, after the conductors of the two cable sections have been electrically connected to each other by means of a conductor joint, the joint insulation system connecting to the inner semiconducting layer of each cable section, to the tapering insulation layer section of each cable section, and to the outer semiconducting layer of each cable section.

Thus, where the electric field tends to be strongest it crosses the interface of the joint insulation layer of the joint insulation system and the insulation layer of each cable section closer to perpendicular, which is closer to the optimal direction in terms of electrical interface strength. The dielectric strength of the joint is thus increased.

The first inclination may be the minimum inclination along the outer surface of the radially innermost portion. The first inclination differs from zero degrees relative to the longitudinal axis of the power cable.

The intermediate portion of the tapering insulation layer section may be frustoconical. The outer surface of the intermediate portion may thus have the second inclination along the entire length of the intermediate portion.

The power cable may be a submarine power cable or an underground land cable.

The power cable may be a high voltage, extra high voltage, or an ultra-high voltage power cable. With high voltage is herein meant a nominal voltage of at least 72 kV, such as at least 145 kV, such as at least 220 kV

The power cable may be an AC power cable or a DC power cable.

According to one embodiment the processing is performed such that an outer surface of a radially outermost portion of the tapering insulation layer section interfacing the outer semiconducting layer, obtains a third inclination which is smaller than the second inclination, wherein the outer surface of the intermediate portion transitions smoothly to the outer surface of the radially outermost portion.

Thus, where the electric field tends to be strongest it crosses the interface of the joint insulation layer of the joint insulation system and the insulation layer of each cable section closer to perpendicular, which is closer to the optimal direction in terms of electrical interface strength. The dielectric strength of the joint is thus increased.

The third inclination may be the minimum inclination along the outer surface of the radially outermost portion. The third inclination differs from zero degrees relative to the longitudinal axis of the power cable.

According to one embodiment the first inclination and the third inclination are essentially the same. For example, an angle of the first inclination and an angle of the third inclination may differ at most 3°, such as at most 2°, such as most 1°.

According to one embodiment the outer surface of the radially outermost portion is convex.

According to one embodiment the second inclination has an inclination angle in a range of 8-20°. By processing the intermediate portion to have an inclination angle in this range, an optimal trade-off between having an interface with the insulation layer of the joint insulation system that gives a satisfying dielectric strength along the intermediate portion due to it being relatively close to 0°, i.e., close to 90° in relation to the electric field, while not having to make the joint extremely long, can be obtained.

According to one embodiment the outer surface of the radially innermost portion is concave.

According to one embodiment prior to step c), the tapering insulation layer section of each cable section has a generally S-shape or an S-shape in a side view of the power cable.

According to one embodiment the insulation system of each cable section is an extruded insulation system.

There is according to a second aspect of the present disclosure provided a power cable comprising: two jointed cable sections, each cable section comprising a conductor, and an insulation system including an inner semiconducting layer arranged around the conductor, an insulation layer arranged radially outside the inner semiconducting layer, and an outer semiconducting layer arranged radially outside the insulation layer, wherein the conductors of the two cable sections are electrically connected to each other by means of a conductor joint, wherein the insulation system of each cable section has a gradually increasing radius in an axial direction away from the conductor joint, forming a tapering insulation layer section that tapers towards the conductor joint, wherein an outer surface of a radially innermost portion of the tapering insulation layer section, interfacing the inner semiconducting layer, has a first inclination relative to a longitudinal axis of the power cable, and an outer surface of an intermediate portion of the tapering insulation layer section has a second inclination which is larger than the first inclination, wherein the outer surface of the radially innermost portion transitions smoothly to the outer surface of the intermediate portion, and a joint insulation system connecting to the inner semiconducting layer of each cable section, to the tapering insulation layer section of each cable section, and to the outer semiconducting layer of each cable section.

According to one embodiment an outer surface of a radially outermost portion of the tapering insulation layer section interfacing the outer semiconducting layer, has a third inclination which is smaller than the second inclination, wherein the outer surface of the intermediate portion transitions smoothly to the outer surface of the radially outermost portion.

According to one embodiment the first inclination and the third inclination are essentially the same.

According to one embodiment the outer surface of the radially outermost portion is convex.

According to one embodiment the second inclination has an inclination angle in a range of 8-20°.

According to one embodiment the outer surface of the radially innermost portion is concave.

According to one embodiment in a longitudinal section of the power cable, the tapering insulation layer section of each cable section has a generally S-shape or an S-shape.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a longitudinal section of an example of a power cable; and
Fig. 2 is a flowchart of a method of making a joint of a power cable.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

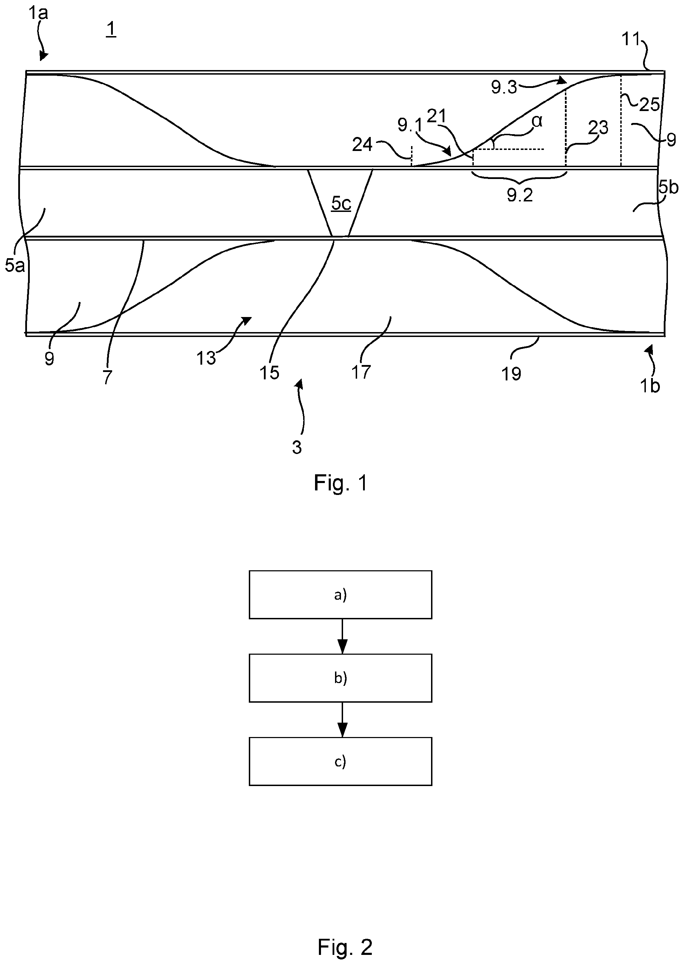

Fig. 1 schematically shows a longitudinal section of a portion of an example of a power cable 1 according to the present disclosure.

The power cable 1 comprises two cable sections 1a and 1b and a joint 3. The two cable sections 1a and 1b are joined by means of the joint 3.

The joint 3 may be a flexible field joint or a factory joint.

Each cable section 1a, 1b comprises a conductor 5a, 5b. The conductors 5a, 5b are electrically connected to each other by means of a conductor joint 5c.

The conductors 5a, 5b may comprise aluminium, an aluminium alloy, or copper or a copper alloy. Both conductors 5a, 5b may be made of the same metal material or they may be different materials. For example one of the conductors 5a, 5b, may comprise copper and the other one may comprise aluminium.

The conductors 5a, 5b may have the same outer dimension or they may have different outer dimensions.

On one example, the conductor joint 5c may comprise an adapter piece for example if the two conductors 5a, 5b are of different material and/or of different dimensions.

Each of the conductors 5a, 5b may be one of: a solid conductor, a round stranded conductor, a compacted conductor, or a segmented/Milliken conductor.

Each cable section 1a, 1b comprises an insulation system. The insulation system comprises an inner semiconducting layer 7 arranged around the conductor 5a, 5b, an insulation layer 9 arranged around the inner semiconducting layer 7, and an outer semiconducting layer 11 arranged around the insulation layer 9.

The insulation system may be an extruded insulation system.

The insulation layer 9 may comprise a thermosetting or thermoplastic polymer. The insulation layer 9 may for example comprise a polyolefin such as polyethylene, e.g., crosslinked polyethylene (XLPE), polypropylene, or an elastomer such as ethylene propylene diene monomer (EPDM) rubber or ethylene propylene (EPR) rubber.

The power cable 1 comprises a joint insulation system 13 that connects the insulation systems of the two cable sections 1a and 1b. The joint insulation system 13 comprises an inner semiconducting layer 15 which is directly connected to, or fused with, the inner semiconducting layer 7 of each of the two cable sections 1a, 1b. The joint insulation system 13 comprises an insulation layer 17 which is directly connected to, or fused with, the insulation layer 9 of each of the two cable sections 1a, 1b. Moreover, the joint insulation system 13 comprises an outer semiconducting layer 19 which is directly connected to, or fused with, the outer semiconducting layer 11 of each of the two cable sections 1a, 1b. The joint insulation system 13 may be thermally fused with the insulation system of the two cable sections 1a, 1b.

The insulation system of each cable section 1a, 1b has a gradually increasing radius in an axial direction away from the conductor joint 5c, forming a tapering insulation layer section that tapers towards the conductor joint 5c.

An outer surface of a radially innermost portion 9.1 of the tapering insulation layer section, interfacing the inner semiconducting layer 7 of the cable section 1a, 1b in question, has a first inclination relative to a longitudinal axis of the power cable 1.

At the interface with the inner semiconducting layer 7, where the radially innermost portion 9.1 terminates, the outer surface of the radially innermost portion 9.1 may have an inclination angle that is close to zero with respect to the longitudinal axis of the power cable 1. The inclination angle may for example be less than 5°, such as less than 4°, such as less than 3°, such as less than 2°, such as less than 1°.

An outer surface of an intermediate portion 9.2 of the tapering insulation layer section, in Fig. 1 delimited to extend between the vertical lines 21 and 23, has a second inclination which is larger than the first inclination. The outer surface of the entire intermediate portion 9.2 may have the same inclination. The intermediate portion 9.2 may have a frustoconical shape. The second inclination may have an inclination angle α in a range of 8-20°.

The innermost portion 9.1 extends from the axial point where the insulation layer 9 begins or terminates, at vertical line 24in Fig. 1, up to the point where the intermediate portion 9.2 begins, which is where the tapering insulation layer section becomes frustoconical, i.e., at the vertical line 21.

The outer surface of the innermost portion 9.1 transitions smoothly to the outer surface of the intermediate portion 9.2. There is thus no step or in the mathematical sense a discontinuity as the outer surface of the innermost portion 9.1 transitions to the outer surface of the intermediate portion 9.2.

The outer surface of the innermost portion 9.1 may have different inclinations at different locations in a direction towards the intermediate portion 9.1. The inclination of the outer surface of the innermost portion 9.1 may increase closer to the intermediate portion 9.2. The outer surface of the innermost portion 9.1 may be concave. The outer surface of the innermost portion 9.1 may have an exponential shape or it may have a curved shape with a radius in a range from 1/5 to 3 times the thickness of the insulation layer 9, for example in a range of 3/10 to 2.5 times the thickness of the insulation layer 9, for example in a range of 4/10 to 2 times the thickness of the insulation layer 9, such as 0.5 to 1.5 times the thickness of the insulation layer 9.

An outer surface of a radially outermost portion 9.3 of the tapering insulation layer section, which extends between the vertical line 23 and the point where the insulation layer 9 first contacts the outer semiconducting layer 11/19 indicated by the vertical line 25, and thus interfaces the outer semiconducting layer 11/19, has a third inclination which is smaller than the second inclination.

At the interface with the outer semiconducting layer 11/19, where the outer surface of the radially outermost portion 9.3 first contacts the outer semiconducting layer 11/19, the outer surface of the radially outermost portion 9.3 may have an inclination angle that is close to zero with respect to the longitudinal axis of the power cable 1, for example less than 5°, such as less than 4°, such as less than 3°, such as less than 2°, such as less than 1°.

The first inclination and the third inclination may be essentially the same. For example, the first inclination and the third inclination may differ by at most 3°, such as at most 2°, or at most 1°.

The outer surface of the intermediate portion 9.2 transitions smoothly to the outer surface of the radially outermost portion 9.3. There is thus no step or in the mathematical sense a discontinuity as the outer surface of the intermediate portion 9.2 transitions to the outer surface of the radially outermost portion 9.3.

The outer surface of the outermost portion 9.3 may have different inclinations at different locations in a direction towards the outer semiconducting layer 11/19. The inclination of the outer surface of the outermost portion 9.1 may decrease closer to the outer semiconducting layer 11/19. The outer surface of the outermost portion 9.3 may be convex. The outer surface of the outermost portion 9.3 may have a curved shape with a radius in a range from 1/5 to 3 times the thickness of the insulation layer 9, for example in a range of 3/10 to 2.5 times the thickness of the insulation layer 9, for example in a range of 4/10 to 2 times the thickness of the insulation layer 9, such as 0.5 to 1.5 times the thickness of the insulation layer 9.

In a longitudinal section of the power cable 1, the tapering insulation layer section of each cable section 1a, 1b may have a generally S-shape, S-like shape, or an S-shape.

The tapering insulation layer section consists of the radially innermost portion 9.1, the intermediate portion 9.2, and the radially outermost portion 9.2.

Fig. 2 is a flowchart of a method of making the joint 3 of the power cable 1.

In a step a) the two cable sections 1a and 1b to be jointed are provided. Each of the conductors 5a and 5b has a conductor end, which during the processes of making the joint 3 are joined to form the conductor joint 5c.

In a step b) the insulation system of each of the two cable sections 1a and 1b is mechanically processed by gradually increasing a radius of the insulation layer 9 in an axial direction away from the conductor end of the cable section 1a, 1b, to obtain the tapering insulation layer section that tapers towards the conductor end. The mechanical processing may be carried out using e.g., a lathe tool. The mechanical processing may be performed by a robot or by a human

The processing in step b) is performed such that the tapering insulation layer section obtains the radially innermost portion 9.1 and the intermediate portion 9.2. Optionally, the processing in step b) may be performed such that the tapering insulation layer section also obtains the radially outermost portion 9.3 structured as described above.

Step b) may be carried out before or after the conductor joint 5c has been made.

In a step c) after the conductors 5a, 5b of the two cable sections 1a, 1b have been electrically connected to each other by means of the conductor joint 5c, the joint insulation system 13 is made.

The joint insulation system 13 may for example be made by first winding a semiconducting tape around the conductor joint 5c and an exposed portion of each of the two conductor ends up to the inner semiconducting layer 7 of both cable sections 1a, 1b. The semiconducting tape may then be heat treated and optionally crosslinked. The inner semiconducting layer 15 of the joint insulation system 13 is thus formed. Next, an insulation tape may be wound around the inner semiconducting layer 15. The insulation tape may then be heat treated and optionally crosslinked. The insulation layer 17 of the joint insulation system 13 is thus formed. Finally, a semiconducting tape may be wound around the insulation layer 17. The semiconducting tape may then be heat treated and optionally crosslinked. The outer semiconducting layer 19 of the joint insulation system 13 is thus formed. As an alternative to using tape, the joint insulation system 13 may be formed by injection moulding or 3d printing.

In one example of the power cable, the tapering insulation layer section consists of only the radially innermost portion 9.1 and the intermediate portion 9.2, which in this case extends all the way to the outer semiconducting layer 11.

In case the power cable 1 comprises multiple power cores, each power core may have a joint 3 as described herein.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of making a joint (3) of a power cable (1), comprising:
a) providing two cable sections (1a, 1b) to be jointed, each cable section (1a, 1b) comprising a conductor (5a, 5b) having a conductor end, and an insulation system including an inner semiconducting layer (7) arranged around the conductor (5a, 5b), an insulation layer (9) arranged radially outside the inner semiconducting layer (7), and an outer semiconducting layer (11) arranged radially outside the insulation layer (9),
b) mechanically processing the insulation system of each cable section (1a, 1b) by gradually increasing a radius of the insulation layer (9) in an axial direction away from the conductor end of the cable section (1a, 1b), to obtain a tapering insulation layer section that tapers towards the conductor end,
wherein the processing is performed such that an outer surface of a radially innermost portion (9.1) of the tapering insulation layer section, interfacing the inner semiconducting layer (7), obtains a first inclination relative to a longitudinal axis of the cable section (1a, 1b), and that an outer surface of an intermediate portion (9.2) of the tapering insulation layer section obtains a second inclination which is larger than the first inclination, wherein the outer surface of the radially innermost portion (9.1) transitions smoothly to the outer surface of the intermediate portion (9.2), and
c) making a joint insulation system (13), after the conductors of the two cable sections (1a, 1b) have been electrically connected to each other by means of a conductor joint (5c), the joint insulation system (13) connecting to the inner semiconducting layer (7) of each cable section (1a, 1b), to the tapering insulation layer section of each cable section (1a, 1b), and to the outer semiconducting layer (11) of each cable section (1a, 1b).

2. Method as claimed in claim 1, wherein the processing is performed such that an outer surface of a radially outermost portion (9.3) of the tapering insulation layer section interfacing the outer semiconducting layer (11/19), obtains a third inclination which is smaller than the second inclination, wherein the outer surface of the intermediate portion (9.2) transitions smoothly to the outer surface of the radially outermost portion (9.3).

3. Method as claimed in claim 2, wherein the first inclination and the third inclination are essentially the same.

4. Method as claimed in claim 2 or 3, wherein the outer surface of the radially outermost portion (9.3) is convex.

5. Method as claimed in any of the preceding claims, wherein the second inclination has an inclination angle (α) in a range of 8-20°.

6. Method as claimed in any of the preceding claims, wherein the outer surface of the radially innermost portion (9.1) is concave.

7. Method as claimed in any of the preceding claims, wherein prior to step c), the tapering insulation layer section of each cable section (1a, 1b) has a generally S-shape or an S-shape in a side view of the power cable (1).

8. Method as claimed in any of the preceding claims, wherein the insulation system of each cable section (1a, 1b) is an extruded insulation system.

9. Power cable (1) comprising:
two jointed cable sections (1a, 1b), each cable section (1a, 1b) comprising a conductor (5a, 5b), and an insulation system including an inner semiconducting layer (7) arranged around the conductor (5a, 5b), an insulation layer (9) arranged radially outside the inner semiconducting layer (7), and an outer semiconducting layer (11) arranged radially outside the insulation layer (7),
wherein the conductors (5a, 5b) of the two cable sections (1a, 1b) are electrically connected to each other by means of a conductor joint (5c),
wherein the insulation system of each cable section (1a, 1b) has a gradually increasing radius in an axial direction away from the conductor joint (5c), forming a tapering insulation layer section that tapers towards the conductor joint (5c),
wherein an outer surface of a radially innermost portion (9.1) of the tapering insulation layer section, interfacing the inner semiconducting layer (7), has a first inclination relative to a longitudinal axis of the power cable (1), and an outer surface of an intermediate portion (9.2) of the tapering insulation layer section has a second inclination which is larger than the first inclination, wherein the outer surface of the radially innermost portion (9.1) transitions smoothly to the outer surface of the intermediate portion (9.2), and
a joint insulation system (13) connecting to the inner semiconducting layer (7) of each cable section (1a, 1b), to the tapering insulation layer section of each cable section (1a, 1b), and to the outer semiconducting layer (11) of each cable section (1a, 1b).

10. Power cable (1) as claimed in claim 9, wherein an outer surface of a radially outermost portion (9.3) of the tapering insulation layer section interfacing the outer semiconducting layer (11, 19), has a third inclination which is smaller than the second inclination, wherein the outer surface of the intermediate portion (9.2) transitions smoothly to the outer surface of the radially outermost portion (9.3).

11. Power cable (1) as claimed in claim 10, wherein the first inclination and the third inclination are essentially the same.

12. Power cable (1) as claimed in claim 10 or 11, wherein the outer surface of the radially outermost portion (9.3) is convex.

13. Power cable (1) as claimed in any of claims 9-12, wherein the second inclination has an inclination angle (α) in a range of 8-20°.

14. Power cable (1) as claimed in any of claims 9-13, wherein the outer surface of the radially innermost portion (9.1) is concave.

15. Power cable (1) as claimed in any of claims 9-14, wherein in a longitudinal section of the power cable (1), the tapering insulation layer section of each cable section (1a, 1b) has a generally S-shape or an S-shape.
